# EUROPÄISCHE PATENTANMELDUNG

(11) **EP 4 391 290 A1**
(43) Veröffentlichungstag der Anmeldung: **26.06.2024**
(21) Anmeldenummer: 23211611.1
(22) Anmeldetag: 22.11.2023
(51) Int. Cl.: H02J 7/00, B60L 50/64, B60L 53/53, H01M 50/251

(54) **BATTERIEANORDNUNG FÜR EINE LADESTATION FÜR ELEKTROFAHRZEUGE, LADESTATION MIT EINER SOLCHEN BATTERIEANORDNUNG UND ÜBERBRÜCKUNGSADAPTER FÜR EINE SOLCHE BATTERIEANORDNUNG**

(30) Priorität: 24.11.2022 DE 102022131175
(71) Anmelder: ads-tec Energy GmbH, 72622 Nürtingen (DE)
(72) Erfinder: Greye, Benjamin, 73230 Kirchheim (DE); Schuchter, Johannes, 85630 Grasbrunn (DE); Zimmer, Michael, 72649 Wolfschlugen (DE)
(74) Vertreter: Kordel, Mattias

(57) **Zusammenfassung**

Die Erfindung betrifft eine Batterieanordnung (3) für eine Ladestation (1) für Elektrofahrzeuge, mit einem Einbaurahmen (5), der eine Mehrzahl von zueinander benachbart angeordneten Aufnahmefächern (7) aufweist, wobei jedes Aufnahmefach (7) eingerichtet ist zur Aufnahme eines Batteriemoduls (11), wobei die Aufnahmefächer (7) zumindest zu einer Frontseite (13) des Einbaurahmens (5) hin offen sind, sodass die Batteriemodule (11) von der Frontseite (13) her in die Aufnahmefächer (7) eingebracht werden können.

## Beschreibung

Die Erfindung betrifft eine Batterieanordnung für eine Ladestation für Elektrofahrzeuge, eine Ladestation mit einer solchen Batterieanordnung und einen Überbrückungsadapter für eine solche Batterieanordnung.

Aus der EP 3 466 748 A1 geht eine Ladestation für Elektrofahrzeuge hervor, die eine Batterie als Energiespeicher aufweist. Solche Batterien sind typischerweise groß und unhandlich. Sie weisen außerdem ein insbesondere für die Handhabung durch Laien nicht zugelassenes Spannungsniveau auf. Eine Anpassung der Batterien auf eine konkret am Standort der Ladestation herrschende Versorgungssituation oder einen Bedarf ist kaum oder gar nicht möglich, und eine Kühlung der Batterien im Betrieb ist verbesserungsfähig, insbesondere wenn eine solche Batterie luftgekühlt ist.

Der Erfindung liegt die Aufgabe zugrunde, eine Batterieanordnung für eine Ladestation für Elektrofahrzeuge, eine Ladestation mit einer solchen Batterieanordnung und einen Überbrückungsadapter für eine solche Batterieanordnung zu schaffen, wobei die genannten Nachteile reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem eine Batterieanordnung für eine Ladestation für Elektrofahrzeuge geschaffen wird, wobei die Batterieanordnung einen Einbaurahmen aufweist, der eine Mehrzahl von zueinander benachbart angeordneten Aufnahmefächern aufweist. Jedes Aufnahmefach ist eingerichtet zur Aufnahme eines Batteriemoduls. Die Aufnahmefächer sind zumindest zu einer Frontseite des Einbaurahmens, insbesondere zusätzlich zu einer Rückseite hin offen, sodass die Batteriemodule von der Frontseite her in die Aufnahmefächer eingebracht werden können. Vorteilhaft ist die Batterieanordnung auf diese Weise modular aufgebaut, wobei die einzelnen Batteriemodule in einfacher Weise in die ihnen jeweils zugeordneten Aufnahmefächer eingesetzt sowie aus diesen entnommen werden können. Nicht zuletzt wird hierdurch insbesondere eine Wartung des Batteriemoduls deutlich vereinfacht, und die damit verbundenen Kosten sind gering.

Die Aufnahmefächer sind insbesondere als Einschubräume ausgebildet. Insbesondere können die Batteriemodule von der Frontseite her in die Aufnahmefächer eingeschoben werden.

Gemäß einer Weiterbildung der Erfindung ist vorgesehen, dass die Batterieanordnung außerdem eine Frontplatte aufweist, die eingerichtet ist, um an der Frontseite des Einbaurahmens angeordnet zu werden und die Aufnahmefächer zu schließen, wenn die Frontplatte an der Frontseite des Einbaurahmens angeordnet ist. Die Batteriemodule können somit in sehr einfacher und zugleich sicherer sowie stabiler Weise in den Aufnahmefächern festgelegt oder festgehalten werden, wobei insbesondere mittels der Frontplatte ohne weiteres alle Aufnahmefächer zugleich geschlossen werden können. Weiterhin ermöglicht die Frontplatte eine sichere Abdeckung der Batteriemodule zu der Frontseite hin, sodass diese besonders gut geschützt sind, insbesondere im Vergleich zu der Anordnung eines Haltebalkens, der sich nur bereichsweise über eine der Frontseite zugewandte Stirnfläche der Batteriemodule erstreckt.

Gemäß einer Weiterbildung der Erfindung ist vorgesehen, dass die Frontplatte und der Einbaurahmen korrespondierende Befestigungselemente aufweisen, die eingerichtet sind, um die Frontplatte an dem Einbaurahmen zu befestigen. Auf diese Weise können die Frontplatte und der Einbaurahmen besonders einfach und zugleich sicher aneinander befestigt werden.

In einer Ausführungsform sind die Befestigungselemente als - jeweils korrespondierende - Verschraubungselemente ausgebildet, wobei ein jeweiliges Verschraubungselement insbesondere ausgewählt ist aus einer Gruppe, bestehend aus: Einer Schraubbohrung, einem Gewindeelement, insbesondere einer Mutter oder einem in die Frontplatte oder den Einbaurahmen eingebrachten Gewinde, einem Stehbolzen, und einem Gewindestift.

Gemäß einer Weiterbildung der Erfindung ist vorgesehen, dass die Frontplatte eine Mehrzahl an Lüftungsöffnungen für eine die Aufnahmefächer durchströmende Kühlluftströmung aufweist. Dies ermöglicht eine sowohl effektive als auch effiziente Luftkühlung der in dem Einbaurahmen angeordneten Batteriemodule.

In einer Ausführungsform sind die Lüftungsöffnungen eingerichtet, um die Kühlluftströmung zu lenken. Vorteilhaft ermöglicht dies eine gute und effektive Verteilung der Kühlluftströmung in dem Einbaurahmen über die Frontplatte. Insbesondere sind die Lüftungsöffnungen eingerichtet, um die Kühlluftströmung auf die Batteriemodule zu lenken. Diese werden dadurch besonders gut umströmt und gekühlt.

Insbesondere sind jedem Aufnahmefach und damit insbesondere auch jedem Batteriemodul zwei elektrische Kontakte und insbesondere ein Steueranschluss zugeordnet, insbesondere eine elektronische Schnittstelle, beispielsweise eine serielle Schnittstelle, beispielsweise eine CAN-Schnittstelle.

Gemäß einer Weiterbildung der Erfindung ist vorgesehen, dass die Batterieanordnung an der der Frontseite des Einbaurahmens gegenüberliegenden Rückseite eine Kontaktierungsplatte aufweist, die eingerichtet ist, um die Batteriemodule in den Aufnahmefächern zu kontaktieren. Insbesondere ist die Kontaktierungsplatte eingerichtet, um die Batteriemodule elektrisch zu kontaktieren. In einer Ausführungsform ist die Kontaktierungsplatte zusätzlich eingerichtet, um die Batteriemodule steuerungstechnisch zu kontaktieren.

Insbesondere ist die Kontaktierungsplatte eingerichtet, um die Batteriemodule miteinander - elektrisch und insbesondere zusätzlich steuerungstechnisch - in Reihe zu schalten.

Insbesondere weist die Kontaktierungsplatte für jedes Aufnahmefach und damit insbesondere für jedes Batteriemodul die beiden elektrische Kontakte und insbesondere den Steueranschluss, insbesondere die elektronische Schnittstelle auf. In einer Ausführungsform weist die Kontaktierungsplatte außerdem für jedes Batteriemodul mindestens einen Führungs- und Positionierstift, vorzugsweise jeweils zwei Führungs- und Positionierstifte einerseits für die elektrischen Kontakte und andererseits für den Steueranschluss auf.

In einer Ausführungsform weisen die Kontaktierungsplatte und der Einbaurahmen korrespondierende weitere Befestigungselemente auf, die eingerichtet sind, um die Kontaktierungsplatte an dem Einbaurahmen zu befestigen. Auf diese Weise können die Kontaktierungsplatte und der Einbaurahmen besonders einfach und zugleich sicher aneinander befestigt werden.

In einer Ausführungsform sind die weiteren Befestigungselemente als - jeweils korrespondierende - weitere Verschraubungselemente ausgebildet, wobei ein jeweiliges weiteres Verschraubungselement insbesondere ausgewählt ist aus einer Gruppe, bestehend aus: Einer Schraubbohrung, einem Gewindeelement, insbesondere einer Mutter oder einem in die Kontaktierungsplatte oder den Einbaurahmen eingebrachten Gewinde, einem Stehbolzen, und einem Gewindestift.

Gemäß einer Weiterbildung der Erfindung ist vorgesehen, dass die Batterieanordnung mindestens einen Überbrückungsadapter aufweist, der eingerichtet ist, um ein nicht mit einem Batteriemodul bestücktes, das heißt freibleibendes Aufnahmefach der Mehrzahl an Aufnahmefächern,- elektrisch und insbesondere zusätzlich steuerungstechnisch - zu überbrücken. Vorteilhaft ermöglicht dies eine Skalierung der Batterieanordnung durch Anordnung von mehr oder weniger Batteriemodulen in dem Einbaurahmen, wobei insbesondere Aufnahmefächer frei bleiben und anstelle des Einsatzes eines Batteriemoduls mit dem Überbrückungsadapter überbrückt werden können. Insbesondere ist der Überbrückungsadapter eingerichtet, um die Kontaktierungsplatte im Bereich des freibleibenden Aufnahmefachs zu überbrücken.

Der Überbrückungsadapter kann insbesondere von der Frontseite her in ein freibleibendes Aufnahmefach eingeschoben und bis zu der Kontaktierungsplatte durchgeschoben werden, wo er mit der Kontaktierungsplatte in Verbindung gebracht wird. Insbesondere weist der Überbrückungsadapter Rastmittel auf, um mechanisch mit der Kontaktierungsplatte verrastet oder an die Kontaktierungsplatte angeclipst zu werden.

Insbesondere ist der Überbrückungsadapter eingerichtet, um die dem Aufnahmefach, in das der Überbrückungsadapter eingeschoben ist, zugeordneten elektrischen Kontakte, insbesondere die elektrischen Kontakte der Kontaktierungsplatte, miteinander zu verbinden und damit zu überbrücken. Insbesondere ist der Überbrückungsadapter zusätzlich eingerichtet, um den dem Aufnahmefach zugeordneten Steueranschluss, insbesondere den Steueranschluss der Kontaktierungsplatte, zu überbrücken insbesondere mindestens einen Eingangspin des Steueranschluss mit mindestens einem Ausgangspin des Steueranschluss zu verbinden.

Gemäß einer Weiterbildung der Erfindung ist vorgesehen, dass die Batterieanordnung mindestens eine Blende aufweist, die eingerichtet ist, um an der Frontplatte angeordnet zu werden und mindestens eine Lüftungsöffnung der Mehrzahl an Lüftungsöffnung der Frontplatte abzudecken. Insbesondere können vorteilhaft auf diese Weise Lüftungsöffnungen freibleibender Aufnahmefächer geschlossen werden.

In einer Ausführungsform ist die Blende eingerichtet, um eine Mehrzahl an Lüftungsöffnungen zugleich, insbesondere über eine gesamte Breite der Frontplatte, abzudecken. In besonders einfacher Weise können so ganze Reihen von Aufnahmefächern des Einbaurahmens frei bleiben, wobei die zugeordneten Lüftungsöffnungen schnell mittels der Blende geschlossen werden können.

Gemäß einer Weiterbildung der Erfindung ist vorgesehen, dass der Einbaurahmen eine Mehrzahl an übereinander angeordneten Einbauzeilen von nebeneinander angeordneten Aufnahmefächer aufweist. Der Einbaurahmen ist somit vorteilhaft matrixartig aufgebaut.

In einer Ausführungsform ist vorgesehen, dass der Einbaurahmen eine Mehrzahl an übereinander angeordneten Einbauzeilen von jeweils drei nebeneinander angeordneten Aufnahmefächern aufweist. Insbesondere weist der Einbaurahmen in einer Ausführungsform sieben Einbauzeilen auf. Insbesondere weist somit der Einbaurahmen 21 (3x7) Aufnahmefächer auf.

In einer Ausführungsform weist der Einbaurahmen ein die Aufnahmefächer aufweisendes oder bildendes Einbauregal und ein Einbaugehäuse auf, in dem das Einbauregal angeordnet, insbesondere befestigt ist. Das Einbaugehäuse kann vorteilhaft einfach in ein Ladestations-Gehäuse einer Ladestation eingesetzt, insbesondere eingeschoben, und dort insbesondere befestigt werden.

In einer Ausführungsform kann die Frontplatte an dem Einbauregal befestigt werden. Alternativ kann die Frontplatte an dem Einbaugehäuse befestigt werden.

Alternativ oder zusätzlich kann die Kontaktierungsplatte an dem Einbaugehäuse befestigt werden. Alternativ kann die Kontaktierungsplatte an dem Einbauregal befestigt werden.

Gemäß einer Weiterbildung der Erfindung ist vorgesehen, dass der Einbaurahmen zumindest teilweise gegenüber einer Vertikalen - insbesondere in Richtung der Rückseite - geneigt ist. Vorteilhaft ermöglicht dies eine verbesserte Kühlluftströmung durch den Einbaurahmen zur Kühlung der Batteriemodule, insbesondere indem ein Einströmquerschnitt der Aufnahmefächer an der Frontseite und ein Abströmquerschnitt der Aufnahmefächer an der Rückseite für die Kühlluft vergrößert wird. Insbesondere wird durch die zumindest teilweise Neigung des Einbaurahmens zugleich gewährleistet, dass die einzelnen Batteriemodule homogen angeströmt werden. Vorzugsweise strömt die Kühlluft die Aufnahmefächer frontseitig im Betrieb der Batterieanordnung von geodätisch oben her an, wobei die Kühlluft die einzelnen Aufnahmefächer von der Frontseite zu der Rückseite hin durchströmt und an der Rückseite nach geodätisch unten abströmt.

Die Vertikale ist insbesondere eine bestimmungsgemäße geodätische Hochrichtung des Einbaurahmens, insbesondere eine Hochrichtung, in der die Aufnahmefächer übereinander angeordnet sind.

Insbesondere ist das Einbauregal gegenüber einer Gehäuse-Frontseite des Einbaugehäuses - insbesondere in Richtung der Rückseite - geneigt, insbesondere gleichsam nach hinten verkippt.

Insbesondere sind die Aufnahmefächer auch einzeln gegenüber der Vertikalen geneigt. Insbesondere sind auch Einschubböden der Aufnahmefächer gegenüber der Vertikalen geneigt.

Insbesondere ist der Einbaurahmen zumindest teilweise, insbesondere das Einbauregal, um einen Winkel von 0,1° bis 3°, insbesondere um 1,8°, gegenüber der Vertikalen geneigt. Dies bedeutet entsprechend, dass der Einbaurahmen zumindest teilweise, insbesondere das Einbauregal, gegenüber einer geodätischen Horizontalebene um einen Winkel von 90,1° bis 93°, insbesondere 91,8°, geneigt ist.

In einer Ausführungsform ist die Gehäuse-Frontseite des Einbaugehäuses vertikal ausgerichtet, während eine Gehäuse-Rückseite des Einbaugehäuses die Neigung des Einbauregals aufweist. Auf diese Weise kann die Kontaktierungsplatte an der Gehäuse-Rückseite des Einbaugehäuses befestigt sein und zugleich die in den Aufnahmefächern angeordneten Batteriemodule sicher kontaktieren.

Gemäß einer Weiterbildung der Erfindung ist vorgesehen, dass die Batterieanordnung mindestens ein Batteriemodul aufweist.

Insbesondere weist das mindestens eine Batteriemodul zumindest einen Modulparameter auf, der ausgewählt ist aus einer Gruppe, bestehend aus: Einer Spannung von weniger als 120 V, insbesondere weniger als 60 V, insbesondere weniger als 40 V, insbesondere weniger als 35 V; und einer Masse von weniger als 30 kg, insbesondere weniger als 25 kg.

Weist das Batteriemodul eine Spannung von weniger als 120 V auf, unterschreitet es vorteilhaft die Kleinspannung mit nicht lebensbedrohlicher Berührspannung für erwachsene Menschen und kann damit einfach gehandhabt werden. Weist das Batteriemodul eine Spannung von weniger als 60 V auf, unterschreitet es vorteilhaft die Kleinspannung für jedermann, auch Kinder und Tiere, und kann damit besonders einfach - insbesondere auch von jeglichem Laien - gehandhabt werden. Es bedarf somit insbesondere keiner elektrischen Fachkraft zur Handhabung des Batteriemoduls, insbesondere auch nicht zum Einsetzen in den oder Entnehmen aus dem Einbaurahmen. Kontaktstellen des Batteriemoduls, die an einer im eingesetzten Zustand der Kontaktierungsplatte zugewandten Rückseite des Batteriemoduls angeordnet und eingerichtet sind, um mit den elektrischen Kontakten der Kontaktierungsplatte verbunden zu werden, sind insbesondere IP20-berührgeschützt, insbesondere als Schutz vor Kurzschluss und/oder Lichtbögen.

Weist das Batteriemodul eine Masse von weniger als 30 kg, insbesondere weniger als 25 kg auf, kann es ohne weiteres von einer Bedienperson gehandhabt werden, wobei keine besonderen Anforderungen an die Körperkräfte gestellt werden. Die Batterieanordnung insgesamt kann somit einfach und rasch, auch von einem Laien, zusammengestellt werden.

Das mindestens eine Batteriemodul weist vorzugsweise eine Mehrzahl von insbesondere miteinander in Reihe geschalteten Batteriezellen auf. Insbesondere weist das Batteriemodul acht miteinander in Reihe geschaltete Batteriezellen auf. Die Batteriezellen können insbesondere als Lithium-Ionen-Zellen ausgebildet sein.

In einer Ausführungsform weisen die einzelnen Batteriezellen eine Spannung von 4,2 V auf. Jedes Batteriemodul mit acht Batteriezellen weist somit insbesondere eine Spannung von 33,6 V auf.

Insbesondere weist jedes Batteriemodul eine Kapazität von 5 kWh, insbesondere 4,787 kWh auf.

Insbesondere können aber durch die modular aufgebaute Batterieanordnung vorteilhaft auch Batteriemodule mit unterschiedlichen verbauten Batteriezellen - insbesondere unter Einsatz der elektrischen Kontakte sowie des Steueranschlusses, um die Batteriemodule elektrisch und steuerungstechnisch zu kontaktieren - miteinander kombiniert werden, insbesondere mit unterschiedlichen Arten von Batteriezellen, Batteriezellen mit verschiedenen Spannungen und/oder Batteriezellen mit verschiedenen Kapazitäten.

In einer Ausführungsform weist das Batteriemodul mindestens einen Einbauadapter auf. Der Einbauadapter ist in einer Ausgestaltung eingerichtet, um ein geometrisch von den Maßen und/oder der Form der Aufnahmefächer abweichendes, insbesondere kleineres Batteriemodul in einem der Aufnahmefächer anordnen zu können. Alternativ oder zusätzlich ist der Einbauadapter als Anschlussadapter ausgebildet und eingerichtet, um ein bezüglich seiner elektrischen oder steuertechnischen Kontaktierung abweichend ausgestaltetes Batteriemodul mit der Kontaktierungsplatte verbinden zu können.

Gemäß einer Weiterbildung der Erfindung ist vorgesehen, dass die Batterieanordnung eine Steuervorrichtung aufweist, die eingerichtet ist, um mit den Batteriemodulen - elektrisch und insbesondere steuerungstechnisch - verbunden zu werden. Die Steuervorrichtung ist insbesondere eingerichtet, um die Batteriemodule, insbesondere alle Batteriezellen, zu überwachen, einen Betrieb im zulässigen Betriebsbereich der Batteriezellen sicherzustellen, und/oder alle Batteriemodul- und/oder Batteriezellspannungen mittels passivem Balancing einander anzugleichen.

Insbesondere ist die Steuervorrichtung mit der Kontaktierungsplatte - elektrisch und insbesondere steuerungstechnisch - verbunden. Insbesondere ist die Steuervorrichtung über die Kontaktierungsplatte mit den Batteriemodulen verbunden.

Die Aufgabe wird auch gelöst, indem eine Ladestation für Elektrofahrzeuge geschaffen wird, die eine erfindungsgemäße Batterieanordnung oder eine Batterieanordnung nach einer oder mehreren der zuvor beschriebenen Ausführungsformen aufweist. In Zusammenhang mit der Ladestation ergeben sich insbesondere diejenigen Vorteile, die zuvor bereits in Zusammenhang mit der Batterieanordnung beschrieben wurden.

Als Ladestation wird in der Elektrotechnik jedwede, insbesondere stationäre oder mobile, Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen. Bekannt sind hier insbesondere Gleichstrom-Schnellladesysteme (high performance charging systems oder high power charging systems, HPC-Systeme) wie das in Europa verbreitete, sogenannte kombinierte Ladesystem (combined charging system, CCS). Beim gattungsmäßigen Gleichstromladen wird Gleichstrom aus der Ladestation direkt in die Batterie des Fahrzeugs eingespeist und hierzu durch einen leistungsstarken Gleichrichter, bevorzugt der Ladestation, vom Stromnetz oder durch große Pufferakkumulatoren an z.B. Solartankstellen bereitgestellt. Im Fahrzeug befindet sich ein Batteriemanagementsystem, das mit der Ladestation direkt oder indirekt kommuniziert, um die Stromstärke und -spannung anzupassen oder bei Erreichung einer vorbestimmten Kapazitätsgrenze den Vorgang zu beenden. Eine Leistungselektronik befindet sich hierbei üblicherweise in der Ladestation. Da die Gleichstromanschlüsse der Ladestation direkt - ohne Umweg über einen AC/DC-Wandler des Fahrzeugs - mit entsprechenden Anschlüssen der Traktionsbatterie verbunden werden, lassen sich verlustarm hohe Ladeströme übertragen, was kurze Ladezeiten ermöglicht.

In einer Ausführungsform ist die Ladestation als eine Ladesäule ausgebildet.

Mit der Batterieanordnung ist die Ladestation insbesondere eine batteriegestützte Ladestation. Insbesondere ist die Ladestation eine batteriegestützte Schnellladestation. Insbesondere weist die Ladestation mindestens einen Ladepunkt, insbesondere genau einen Ladepunkt oder mindestens zwei Ladepunkte, insbesondere genau zwei Ladepunkte, auf.

In einer Ausführungsform ist die Ladestation an ein Stromnetz angeschlossen; in diesem Fall dient die Batterieanordnung insbesondere zum Puffern elektrischer Energie und/oder zum Erhöhen der Ladeleistung, insbesondere im Vergleich zu einem Anschluss an das Stromnetz ohne Batterieanordnung. In einer anderen Ausführungsform ist die Ladestation eine autarke Ladestation, insbesondere eine mobile Ladestation, die ohne Anschluss an ein Stromnetz betrieben wird. In wieder einer anderen Ausführungsform ist die Ladestation eingerichtet, um wahlweise autark oder mit Anschluss an ein Stromnetz betrieben zu werden.

Insbesondere wird ein an der Ladestation zu ladendes Elektrofahrzeug aus der Batterieanordnung heraus mit elektrischer Energie versorgt.

In einer Ausführungsform weist die Ladestation genau eine Batterieanordnung auf. In einer anderen Ausführungsform weist die Ladestation eine Mehrzahl von - insbesondere identisch ausgebildeten - Batterieanordnungen auf. Dabei können die Batterieanordnungen parallelgeschaltet sein, beispielsweise um einen höheren Ladestrom zu ermöglichen, oder unabhängig voneinander betrieben werden, beispielsweise um verschiedene Ladepunkte unabhängig voneinander zu versorgen. In einer Ausführungsform weist die Ladestation genau zwei Batterieanordnungen auf, die zueinander parallelgeschaltet sind oder unabhängig voneinander betrieben werden.

In einer Ausführungsform sind die elektrischen Komponenten der Ladestation ausgelegt für einen Spannungsbereich von 0 V bis 1000 V. Die Leistungselektronik der Ladestation ist insbesondere ausgelegt für einen Spannungsbereich von 150 V bis 920 V. Somit ergibt sich für den Spannungsbereich der Leistungselektronik insbesondere eine Bestückung der Ladestation mit mindestens 6 bis höchstens 27 Batteriemodulen, die jeweils vollständig be- und entladen werden können. Nimmt man in Kauf, dass die Batteriemodule nicht vollständig beladen werden, kann auch eine Bestückung mit bis zu 29 Batteriemodulen erfolgen.

In einer Ausführungsform umfasst der Einbaurahmen - insbesondere aus Gründen einer Höhenbegrenzung - 21 Aufnahmefächer (3x7), sodass die Ladestation in diesem Fall maximal mit 21 Batteriemodulen bestückt werden kann.

Insbesondere ergibt sich für eine Bestückung mit 15 Batteriemodulen ein Spannungsbereich zwischen dem entladenen und dem vollständig geladenen Zustand der Batterieanordnung von 384 V bis 504 V; bei 21 Batteriemodulen ergibt sich entsprechend ein Spannungsbereich von 537,6 V bis 705,6 V.

Die Aufgabe wird auch gelöst, in dem ein Überbrückungsadapter für eine erfindungsgemäße Batterieanordnung oder eine Batterieanordnung nach einer oder mehreren der zuvor beschriebenen Ausführungsformen geschaffen wird, wobei der Überbrückungsadapter eingerichtet ist, um ein nicht mit einem Batteriemodul bestücktes, freibleibendes Aufnahmefach der Batterieanordnung elektrisch und vorzugsweise steuerungstechnisch zu überbrücken. In Zusammenhang mit dem Überbrückungsadapter ergeben sich insbesondere diejenigen Vorteile, die zuvor bereits in Zusammenhang mit der Batterieanordnung oder der Ladestation erläutert wurden.

Gemäß einer Weiterbildung der Erfindung ist vorgesehen, dass der Überbrückungsadapter zwei elektrische Überbrückungskontakte aufweist, die elektrisch leitend miteinander verbunden sind, wobei die elektrischen Überbrückungskontakte eingerichtet sind, um jeweils mit einem elektrischen Kontakt zweier dem freibleibenden Aufnahmefach zugeordneter elektrischer Kontakte, insbesondere mit den dem freibleibenden Aufnahmefach zugeordneten elektrischen Kontakten der Kontaktierungsplatte, elektrisch verbunden zu werden.

Gemäß einer Weiterbildung der Erfindung ist vorgesehen, dass der Überbrückungsadapter - insbesondere zusätzlich - einen Überbrückungsanschluss aufweist, der eingerichtet ist, um einen dem freibleibenden Aufnahmefach zugeordneten Steueranschluss, insbesondere den dem freibleibenden Aufnahmefach zugeordneten Steueranschluss der Kontaktierungsplatte, zu überbrücken.

Insbesondere weist die Batterieanordnung einen erfindungsgemäßen Überbrückungsadapter oder einen Überbrückungsadapter nach einer oder mehreren der zuvor beschriebenen Ausführungsformen auf.

Die Erfindung wird im Folgenden anhand der Zeichnung näher erläutert. Dabei zeigen:
- Figur 1: eine schematische Explosionsdarstellung eines Ausführungsbeispiels einer Batterieanordnung einer Ladestation, und
- Figur 2: eine Darstellung eines Ausführungsbeispiels eines Überbrückungsadapters.

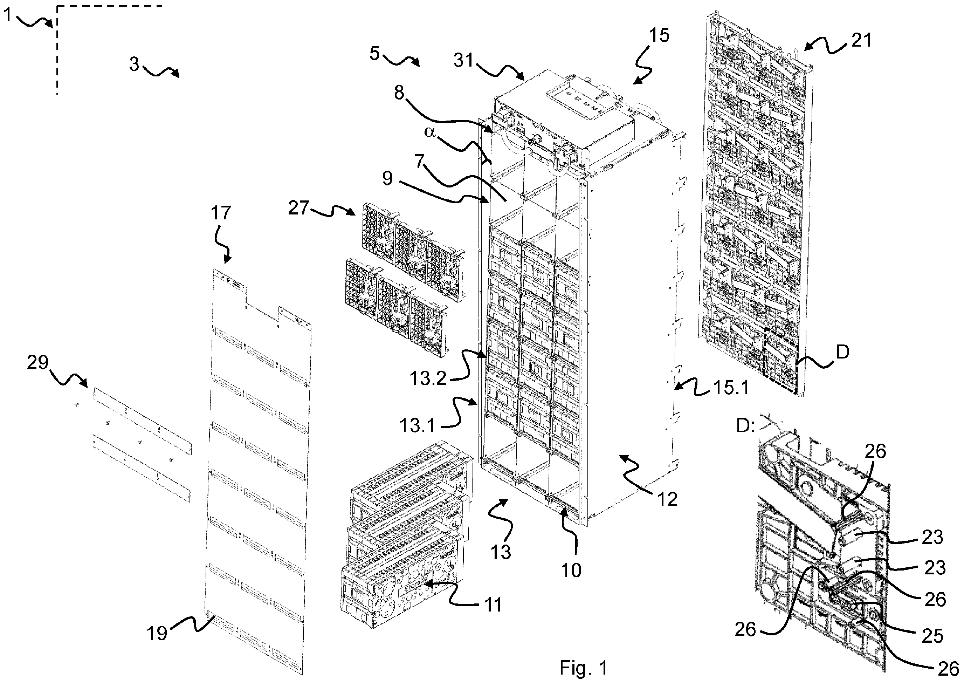

**Fig.** 1 zeigt eine schematische Explosionsdarstellung des Ausführungsbeispiels einer Ladestation 1 für Elektrofahrzeuge mit einem Ausführungsbeispiel einer Batterieanordnung 3.

Die Batterieanordnung 3 weist einen Einbaurahmen 5 auf, der eine Mehrzahl von zueinander benachbart angeordneten Aufnahmefächern 7 aufweist, von denen der besseren Übersichtlichkeit wegen hier nur eines mit einem Bezugszeichen versehen ist. Insbesondere weist der Einbaurahmen 5 sieben übereinander angeordnete Einbauzeilen 9 zu jeweils drei nebeneinander angeordneten Aufnahmefächern 7 auf; oder anders formuliert weist er drei nebeneinander angeordnete Einbausäulen 10 zu jeweils sieben übereinander angeordneten Aufnahmefächern 7 auf. Somit weist der Einbaurahmen 5 insgesamt einundzwanzig (drei mal sieben) Aufnahmefächer 7 auf. Jedes Aufnahmefach 7 ist eingerichtet zur Aufnahme eines Batteriemoduls 11. Die Aufnahmefächer 7 sind zumindest zu einer Frontseite 13 und zu einer der Frontseite 13 gegenüberliegenden Rückseite 15 des Einbaurahmens 5 hin offen, wobei die Batteriemodule 11 von der Frontseite 13 her in die Aufnahmefächer 7 eingebracht werden können.

Der Einbaurahmen 5 weist ein die Aufnahmefächer 7 bildendes Einbauregal 8 und ein Einbaugehäuse 12 auf. Das Einbauregal 8 ist in dem Einbaugehäuse 12 angeordnet und insbesondere gegenüber einer Gehäuse-Frontseite 13.1 des Einbaugehäuses 12 in Richtung auf die Rückseite 15 um einen Winkel α geneigt oder verkippt. Der Winkel α beträgt insbesondere von 0,1° bis 3°, insbesondere 1,8°. Eine Gehäuse-Rückseite 15.1 des Einbaugehäuses 12 ist insbesondere um den gleichen Winkel α gegenüber der Gehäuse-Frontseite 13.1 geneigt oder verkippt.

Die Batterieanordnung 3 weist insbesondere außerdem eine Frontplatte 17 auf, die eingerichtet ist, um an der Frontseite 13 des Einbaurahmens 5 angeordnet, insbesondere über Befestigungselemente befestigt zu werden und die Aufnahmefächer 7 zu schließen, wenn die Frontplatte 17 an der Frontseite 13 des Einbaurahmens 5 angeordnet ist. Insbesondere kann die Frontplatte 17 an einer Regal-Frontseite 13.2 des Einbauregals 8 befestigt werden.

Die Frontplatte 17 weist insbesondere eine Mehrzahl an Lüftungsöffnungen 19 für eine die Aufnahmefächer 7 durchströmende Kühlluftströmung auf.

An der Rückseite 15 weist die Batterieanordnung 3 insbesondere eine Kontaktierungsplatte 21 auf, die eingerichtet ist, um die Batteriemodule 11 in den Aufnahmefächern 7 insbesondere elektrisch und steuerungstechnisch zu kontaktieren. Insbesondere ist die Kontaktierungsplatte 21 eingerichtet, um die Batteriemodule 11 miteinander elektrisch und steuerungstechnisch in Reihe zu schalten. Die Kontaktierungsplatte 21 weist - wie in dem vergrößert dargestellten Detail D gezeigt - für jedes Aufnahmefach 7 und damit insbesondere für jedes Batteriemodul 11 zwei elektrische Kontakte 23 und einen Steueranschluss 25, sowie zusätzlich vorzugsweise j eweils zwei Führungs- und Positionierstifte 26 einerseits für die elektrischen Kontakte 23 und andererseits für den Steueranschluss 25 auf.

Insbesondere kann die Kontaktierungsplatte 21 über weitere Befestigungselemente an dem Einbaurahmen 5 befestigt werden. Insbesondere kann die Kontaktierungsplatte 21 an der Gehäuse-Rückseite 15.1 des Einbaugehäuses 12 befestigt werden.

Die Batterieanordnung 3 weist insbesondere mindestens einen Überbrückungsadapter 27 auf, der eingerichtet ist, um die Kontaktierungsplatte 21 im Bereich eines nicht mit einem Batteriemodul 11 bestückten Aufnahmefachs 7 elektrisch und steuerungstechnisch zu überbrücken. Schematisch sind hier zwei Reihen von jeweils drei nebeneinander angeordneten Überbrückungsadaptern 27 dargestellt, mit denen entsprechend zwei Einbauzeilen 9 überbrückt werden können.

Die Überbrückungsadapter 27 können jeweils von der Frontseite 13 her in ein Aufnahmefach 7 eingeschoben und bis zu der Kontaktierungsplatte 21 durchgeschoben werden, wo sie mit der Kontaktierungsplatte 21 in Verbindung gebracht werden.

Insbesondere weist die Batterieanordnung 3 außerdem mindestens eine Blende 29 auf, die eingerichtet ist, um an der Frontplatte 17 angeordnet zu werden und mindestens eine Lüftungsöffnung 19 abzudecken. Insbesondere ist die Blende 29 eingerichtet, um eine Mehrzahl an Lüftungsöffnungen 19 zugleich, insbesondere über eine gesamte Breite der Frontplatte 17, abzudecken. Entsprechend der in zwei Einbauzeilen 9 angeordneten sechs Überbrückungsadapter 27 sind hier zwei Blenden 29 dargestellt, die eingerichtet sind, um die den sechs Überbrückungsadaptern 27 zugeordneten Lüftungsöffnungen 19 zu schließen.

Die Batterieanordnung 3 weist außerdem eine Steuervorrichtung 31 auf, die mit der Kontaktierungsplatte 21 und über diese mit den Batteriemodulen 11 elektrisch und steuerungstechnisch verbunden ist. Die Steuervorrichtung 31 ist insbesondere eingerichtet, um einen Betrieb im sicheren Betriebsbereich der eingesetzten Batteriezellen sicherzustellen und vorzugsweise alle Batteriemodul- und/oder Batteriezellspannungen mittels passivem Balancing einander anzugleichen.

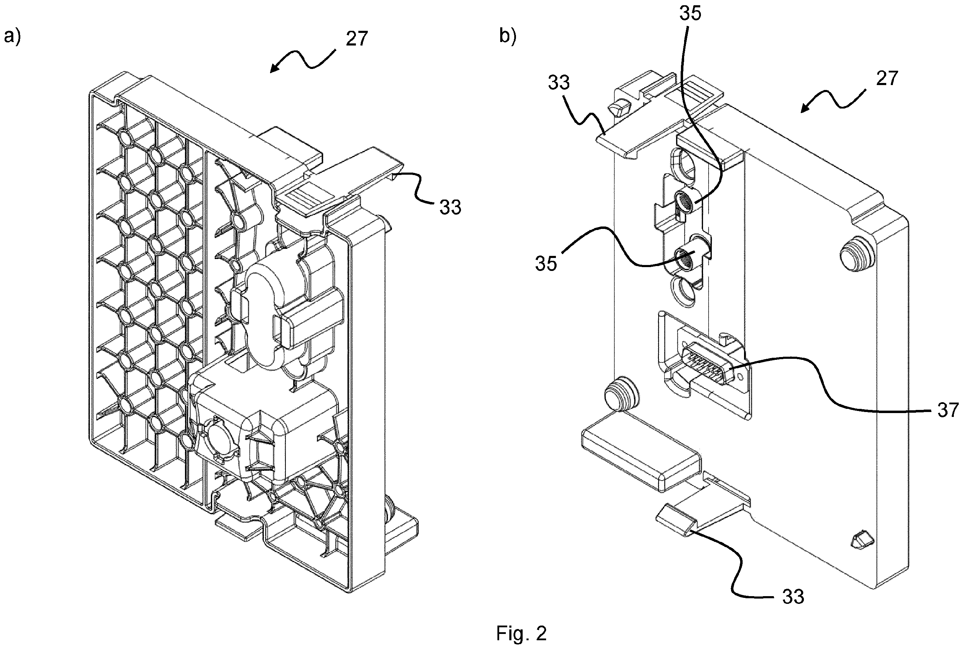

Fig. 2 zeigt eine Darstellung eines Ausführungsbeispiels eines Überbrückungsadapters 27.

Gleiche und funktionsgleiche Elemente sind in allen Figuren mit gleichen Bezugszeichen versehen, sodass insofern jeweils auf die vorangegangene Beschreibung verwiesen wird.

Insbesondere weist der Überbrückungsadapter 27 Rastmittel 33 auf, um mechanisch mit der Kontaktierungsplatte 21 verrastet, insbesondere an die Kontaktierungsplatte 21 angeclipst zu werden.

Insbesondere ist der Überbrückungsadapter 27 eingerichtet, um die dem Aufnahmefach 7, in das der Überbrückungsadapter 27 eingeschoben ist, zugeordneten elektrischen Kontakte 23 der Kontaktierungsplatte 21 miteinander zu verbinden und damit zu überbrücken. Hierzu weist er insbesondere entsprechende, elektrisch leitend miteinander verbundene Überbrückungskontakte 35 auf. Der Überbrückungsadapter 27 ist zusätzlich eingerichtet, um den dem Aufnahmefach 7 zugeordneten Steueranschluss 25 der Kontaktierungsplatte 21 zu überbrücken. Hierfür weist der Überbrückungsadapter 27 insbesondere einen entsprechenden Überbrückungsanschluss 37 auf.

## Patentansprüche

1. Batterieanordnung (3) für eine Ladestation (1) für Elektrofahrzeuge, mit einem Einbaurahmen (5), der eine Mehrzahl von zueinander benachbart angeordneten Aufnahmefächern (7) aufweist, wobei jedes Aufnahmefach (7) eingerichtet ist zur Aufnahme eines Batteriemoduls (11), wobei die Aufnahmefächer (7) zumindest zu einer Frontseite (13) des Einbaurahmens (5) hin offen sind, sodass die Batteriemodule (11) von der Frontseite (13) her in die Aufnahmefächer (7) eingebracht werden können.

2. Batterieanordnung (3) nach Anspruch 1, wobei die Batterieanordnung (3) eine Frontplatte (17) aufweist, die eingerichtet ist, um an der Frontseite (13) des Einbaurahmens (5) angeordnet zu werden und die Aufnahmefächer (7) zu schließen, wenn die Frontplatte (17) an der Frontseite (13) des Einbaurahmens (5) angeordnet ist.

3. Batterieanordnung (3) nach Anspruch 2, wobei die Frontplatte (17) und der Einbaurahmen (5) korrespondierende Befestigungselemente aufweisen, die eingerichtet sind, um die Frontplatte (17) an dem Einbaurahmen (5) zu befestigen.

4. Batterieanordnung (3) nach einem der Ansprüche 2 bis 3, wobei die Frontplatte (17) eine Mehrzahl an Lüftungsöffnungen (19) für eine die Aufnahmefächer (7) durchströmende Kühlluftströmung aufweist, wobei die Lüftungsöffnungen (19) vorzugsweise eingerichtet sind, um die Kühlluftströmung insbesondere auf die Batteriemodule (11) zu lenken.

5. Batterieanordnung (3) nach einem der Ansprüche 2 bis 4, wobei die Batterieanordnung (3) mindestens eine Blende (29) aufweist, die eingerichtet ist, um an der Frontplatte (17) angeordnet zu werden und mindestens eine Lüftungsöffnung (19) der Mehrzahl an Lüftungsöffnungen (19) der Frontplatte (17) abzudecken, wobei die Blende (29) insbesondere eingerichtet ist, um eine Mehrzahl an Lüftungsöffnungen (19) zugleich, insbesondere über eine gesamte Breite der Frontplatte (17), abzudecken.

6. Batterieanordnung (3) nach einem der vorhergehenden Ansprüche, wobei die Batterieanordnung (3) an einer der Frontseite (13) des Einbaurahmens (5) gegenüberliegenden Rückseite (15) eine Kontaktierungsplatte (21) aufweist, die eingerichtet ist, um die Batteriemodule (11) in den Aufnahmefächern (7) zu kontaktieren, insbesondere miteinander in Reihe zu schalten.

7. Batterieanordnung (3) nach einem der vorhergehenden Ansprüche, wobei die Batterieanordnung (3) mindestens einen Überbrückungsadapter (27) aufweist, der eingerichtet ist, um ein nicht mit einem Batteriemodul (11) bestücktes Aufnahmefach (7) der Mehrzahl an Aufnahmefächern (7) zu überbrücken.

8. Batterieanordnung (3) nach einem der vorhergehenden Ansprüche, wobei der Einbaurahmen (5) eine Mehrzahl an übereinander angeordneten Einbauzeilen (9) von jeweils drei nebeneinander angeordneten Aufnahmefächern (7) aufweist, wobei der Einbaurahmen (5) insbesondere sieben Einbauzeilen (9) aufweist.

9. Batterieanordnung (3) nach einem der vorhergehenden Ansprüche, wobei der Einbaurahmen (5) gegenüber einer Vertikalen geneigt ist.

10. Batterieanordnung (3) nach einem der vorhergehenden Ansprüche, wobei die Batterieanordnung (3) mindestens ein Batteriemodul (11) aufweist, wobei das mindestens eine Batteriemodul (11) vorzugsweise zumindest einen Modulparameter aufweist, der ausgewählt ist aus einer Gruppe, bestehend aus: Einer Spannung von weniger als 120 V, insbesondere weniger als 60 V, insbesondere weniger als 40 V, insbesondere weniger als 35 V; und einer Masse von weniger als 30 kg, insbesondere weniger als 25 kg.

11. Batterieanordnung (3) nach einem der vorhergehenden Ansprüche, wobei die Batterieanordnung (3) eine Steuervorrichtung (31) aufweist, die eingerichtet ist, um mit dem mindestens einen Batteriemodul (11) - elektrisch und insbesondere steuerungstechnisch - verbunden zu werden.

12. Ladestation (1) für Elektrofahrzeuge, mit einer Batterieanordnung (3) nach einem der Ansprüche 1 bis 11.

13. Überbrückungsadapter (27) für eine Batterieanordnung (3) nach einem der Ansprüche 1 bis 11, wobei der Überbrückungsadapter (27) eingerichtet ist, um ein freibleibendes Aufnahmefach (7) der Batterieanordnung (3) elektrisch und vorzugsweise steuerungstechnisch zu überbrücken.

14. Überbrückungsadapter (27) nach Anspruch 13, wobei der Überbrückungsadapter (27) zwei elektrische Überbrückungskontakte (35) aufweist, die elektrisch leitend miteinander verbunden sind, wobei die elektrischen Überbrückungskontakte (35) eingerichtet sind, um jeweils mit einem elektrischen Kontakt (23) zweier dem freibleibenden Aufnahmefach (7) zugeordneter elektrischer Kontakte (23) elektrisch verbunden zu werden.

15. Überbrückungsadapter (27) nach einem der Ansprüche 13 oder 14, wobei der Überbrückungsadapter (27) einen Überbrückungsanschluss (37) aufweist, der eingerichtet ist, um einen dem freibleibenden Aufnahmefach (7) zugeordneten Steueranschluss (25) zu überbrücken.
